# EUROPEAN PATENT APPLICATION

(11) **EP 2 953 267 A1**
(43) Date of publication of application: **09.12.2015**
(21) Application number: 15170231.3
(22) Date of filing: 02.06.2015
(51) Int. Cl.: H04B 1/10, H04B 1/403, H04B 7/08

(54) **COMMUNICATIONS WITH INTERFERENCE SUPPRESSION**

(30) Priority: 04.06.2014 US 201414296046
(71) Applicant: NXP B.V., 5656 AG Eindhoven (NL)
(72) Inventor: van Houtum, Wim, Redhill, Surrey RH1 1SH (GB); Kianush, Kave, Redhill, Surrey RH1 1SH (GB)
(74) Representative: Terblanche, Candice Jane

(57) **Abstract**

Various aspects of the disclosure are directed to steering antennas for receiving signals. As may be implemented in accordance with one or more embodiments, an apparatus includes two or more antennas that receive radio signals, a first circuit that directs the antennas and a second circuit that combines signals received by the antennas. The first circuit operates in a first mode by electronically directing the antennas using an analog portion of received signals to modify a radiation pattern of the receive antennas, based on estimated phase-shifts and/or estimated amplitude of the signals. In a second mode, the first circuit uses a digitally-modulated portion of the signals to electronically direct the antennas by modifying the radiation pattern of the receive antennas based on at least one of estimated phase-shifts and estimated amplitude of the signals. Accordingly, null-steering can be effected to eliminate interference.

## Description

Aspects of various embodiments are directed to communications, and suppressing interference in communications.

Many communication approaches involve the transmission and reception of signals in noisy environments. For instance, many communication signals involve the use of bandwidth that is shared by two or more signals, and a communication medium that is subject to other noise. Accordingly, various forms of interference may occur, which can be undesirable.

As a specific example, one communication approach involves receiving signals with multiple antennas. Signals received on each antenna can be combined to form a combined signal representing the transmitted form of the signal. However, such approaches can be challenging to implement. For instance, different antennas may receive electromagnetic waves of differing strength, as may depend upon the orientation of the antennas. Undesired signals may be difficult or impossible to suppress, and proper signal detection can require costly duplication of circuitry for each antenna.

These and other matters have presented challenges to communications, for a variety of applications.

Various example embodiments are directed to communication apparatuses and their implementation.

According to an example embodiment, an apparatus includes two or more antennas that receive radio signals and respective circuits that electronically steer the antennas and combine signals received thereby. An analog-type mode involves directing the antennas toward a signal source using an analog portion of the signals to modify a radiation pattern of the antennas, based on at least one of estimated phase-shifts and estimated amplitude shifts of the received radio signals. In a digital-type mode, a digitally modulated portion of the signals are used to electronically direct the antennas at the signal source in a similar manner. Such approaches may generally involve beam steering, and null steering to mitigate interference. Various embodiments are directed to related methods.

In a more specific embodiment, an apparatus includes a signal source that transmits hybrid in-band on-channel ((H)IBOC) signals, and a receiver having two or more antennas that receive the (H)IBOC signals and respective circuits as above, that steer the antennas and combine the received signals.

In some implementations, the steering involves null steering to mitigate or eliminate interference, as may be present in channels adjacent a central channel in which a desired signal resides (*e.g*., central relative to a carrier signal). In some embodiments, the null steering is carried out by generating surrogate signals having a frequency range centered on a central frequency of the respective central channel and the respective frequencies of the interference. These surrogates can be processed with the interference to null the interference and facilitate reception of the desired signal.

The above discussion/summary is not intended to describe each embodiment or every implementation of the present disclosure. The figures and detailed description that follow also exemplify various embodiments.

Various example embodiments may be more completely understood in consideration of the following detailed description in connection with the accompanying drawings, in which:
FIG. 1 shows an apparatus for beamforming, in accordance with an example embodiment;
FIG. 2 shows an apparatus for beamforming with null steering, in accordance with another example embodiment;
FIG. 3 shows a digital baseband beamformer with null steering, in accordance with another example embodiment:
FIG. 4 shows antenna patterns with electronic steering used for cancelling interference via null steering, in accordance with another example embodiment;
FIG. 5 shows a flow diagram for beamforming, in accordance with another example embodiment; and
FIG. 6 shows plots of signals processed in accordance with one or more embodiments.

While various embodiments discussed herein are amenable to modifications and alternative forms, aspects thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

Aspects of the present disclosure are believed to be applicable to a variety of different types of apparatuses, systems and methods involving wireless communications. While not necessarily so limited, various aspects may be appreciated through a discussion of examples using this context.

Various example embodiments are directed to wireless communications involving the use of multiple antennas, with beam steering that facilitates reception (*e.g*., relative to noise or other unwanted signals). In a particular implementation, a radiation-pattern of a multiple receiver-antenna is electronically steered for receiving signals. The steering is accomplished in a variety of manners. For instance, steering can be based on solely (*e.g*., estimated) phase-shifts, or upon a combination of (*e.g.,* estimated) phase-shifts and (*e.g.,* estimated) amplitudes of multiple received-signals on multiple antennas. As may be characterized in one or more embodiments, steering a radiation-pattern with phase-estimations alone is referred to (digital) phase diversity, and steering a radiation-pattern with both phase estimations and amplitude estimations is referred to as (digital) beamforming. Antennas may, for example, be electronically steered in this regard using phase estimators to provide each antenna with a phase-value, such that each element in the array gets a computed phase-shift.

Various signals can be processed as discussed herein. In various embodiments, an orthogonal frequency-division multiplexing (OFDM) signal having a central portion that is centered on a carrier frequency, a lower sideband below the lowest frequency of the central portion and an upper-sideband above the highest frequency of the central portion. In more particular embodiments, (H)IBOC signals are processed in this regard. The term (H)IBOC as discussed herein refers to an IBOC signal that can be in hybrid or all-digital form. Such approaches can be implemented for the transmission of digital radio and analog radio broadcast signals simultaneously on a common frequency, and/or with a digital approach in which two digital signals are combined.

For hybrid signals including both analog and digital portions, an analog central portion of the received signal is used to perform straightforward and low latency phase-diversity and beamforming. Phase and amplitude-estimations are used to improve reception of the digitally-modulated sidebands without necessarily demodulating them. In some embodiments involving a digital mode, a null-steering approach is implemented. Electronic steering can be used for a receiver antenna in this regard to improve one or more of the suppression of distortion (*e.g*., a first-adjacent FM-distortion), received signal-power and, the reception quality of a desired signal.

Consistent with various embodiments, beamforming facilitates what may be referred to as a null-steering approach, for suppressing (or removing) interference such as first-adjacent FM-distortions in a hybrid mode and in an all-digital mode. Such an approach may be implemented using co-channel interference cancellation. Further, an analog central portion of an (H)IBOC-signal can be used to perform the phase-diversity and beamforming based on a (host) FM-signal. Phase and amplitude-estimations can also be used to apply main-lobe steering (phase-diversity) and null-steering (beamforming) for improved reception of digitally-modulated sidebands without actually demodulating the signals.

For general information regarding communication approaches, and for specific information regarding communication aspects that may be implemented with one or more embodiments, reference may be made to the in-band on-channel digital radio broadcasting standard for the FM-band defined by the FM-part of the NRSC-5 standard "National Radio Systems Committee (NRSC) NRSC-5-C, 'In-band/on-channel Digital Radio Broadcasting Standard', September, 2011"; and to "HD Radio™ Air Interface Design Description Layer 1 FM", Doc. No.: SY_IDD_1011sG Rev. G, August 23, 2011, which are fully incorporated herein by reference. Approaches as described therein may be implemented for transmitting IBOC signals as discussed herein, and as may be implemented with high definition radio broadcasting. One type of IBOC signal is the so-called "Hybrid IBOC FM" signal, which may be referred to as "Hybrid IBOC."

A variety of signal types may be received and processed in accordance with various example embodiments. In some embodiments, hybrid signals that are a combination/addition of an analog FM-signal and a digitally-modulated signal are received, where the analog FM-signal occupies a bandwidth of 200 kHz (*i.e.,* between -100 kHz and +100 kHz separated from the carrier-frequency), and the digitally-modulated signal occupies a bandwidth of roughly 200 kHz and is separated into a lower sideband and an upper-sideband having a bandwidth of roughly 100 kHz. The lower sideband is spectrally positioned at a distance of 100 kHz below the carrier-frequency. The upper side-band is spectrally positioned at a distance of 100 kHz above the carrier-frequency. The total power of the digitally-modulated signal is approximately a factor of hundred smaller than the power of the analog host-FM-signal. The hybrid IBOC signal can be seen as a sort of noisy FM-signal.

In various embodiments, the digitally-modulated signal uses OFDM, where the number of subcarriers can vary depending on the selected service/transmission-mode. The so-called "channel-grid" (the reserved channel-bandwidth for an analog FM-signal) is 200 kHz. As a consequence, the lower and upper digital OFDM-sidebands are using the 1st-adjacent lower and upper neighboring FM channels. Another type of IBOC signal is an all-digital implementation. For the all-digital IBOC FM-signal, the analog FM-signal is replaced by a (secondary) digitally-modulated signal. In the all-digital mode the bandwidth of the primary digital sidebands is fully expanded with lower-power secondary sidebands. For the all-digital IBOC signal, the bandwidth may be roughly 400 kHz, where approximately 100 kHz of lower and upper adjacent channels are occupied (outside the 200 kHz "channel-grid"). The number of extended frequency partitions may, for example, be 0, 1, 2, or 4 depending on the transmitted service mode.

Various embodiments are directed toward beamforming and phase-diversity approaches that combine received radio signals that originate from multiple small non-directional antennas in such a way that a large directional antenna can be simulated. This large simulated directional antenna can be pointed in an electronic way, without moving physically. For reception of signals such as (H)IBOC signals, beamforming is used to point the antenna at the desired signal-source to reduce interference and improve reception quality by "collecting" more signal-power of the desired signal. For general information regarding these approaches, and for specific information regarding approaches that may be implemented in connection with one or more embodiments herein, reference may be made to "A Primer on Digital Beamforming," Toby Haynes, Spectrum Signal Processing, March 26, 1998, which is fully incorporated herein by reference.

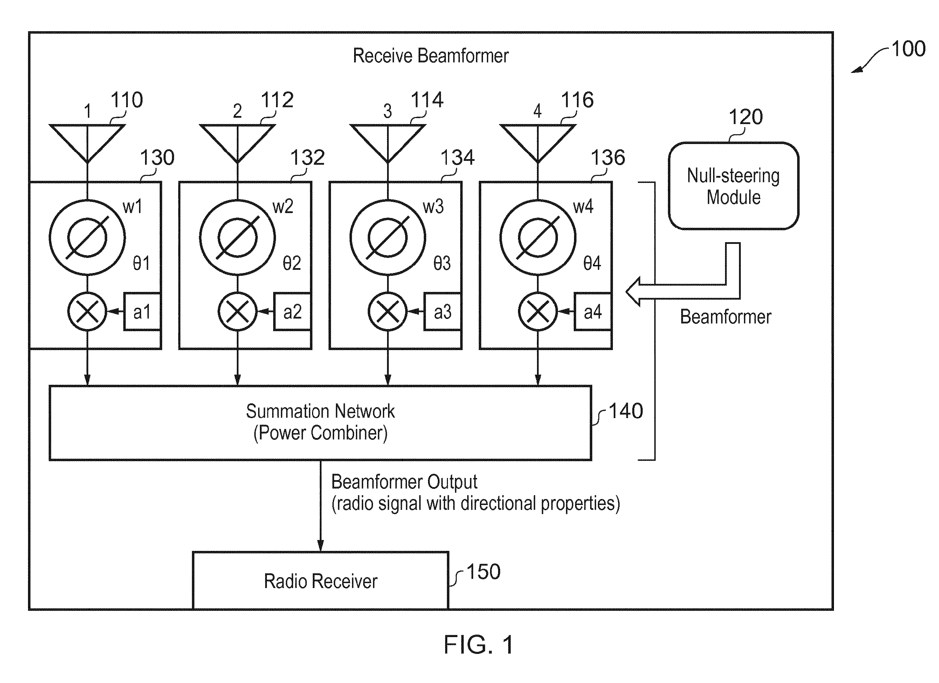

In connection with a more particular embodiment, and as may be implemented in accordance with one or more aspects of Figure 1 as described further below, an apparatus includes two or more antennas that receive radio signals from a signal source, a steering circuit that electronically directs one or more of the antennas and a combining circuit that combines radio signals received by the directed antennas. In a first mode, the antennas are electronically toward the signal source by modifying a radiation pattern of the receive antennas, based on an analog portion of one or more received radio signals and at least one of estimated phase-shifts and estimated amplitude of the received radio signals. In a second mode, the antennas are electronically directed via the radiation pattern, based a digitally-modulated portion of the received radio signals and at least one of estimated phase-shifts and estimated amplitude of the received signals. For instance, unwanted radiation-patterns of the receive antennas can be nulled by electronically directing the receive antennas toward the signal source in both the first mode and the second mode. The combining circuit then combines the radio signals received via the electronically-directed antennas. The combined radio signals can be provided to a radio receiver. Electronically directing in this regard may, for example, involve cancelling or nulling a portion of interference.

In some embodiments, a central portion of the received radio signals is used to electronically direct the receive antennas at the signal source, based on estimated phase-shifts or estimated amplitude of the received signals. FM-distortions are suppressed by nulling interference in the radio signals based on lower and upper interference sidebands of the radio signals that are adjacent the central portion of the radio signals.

In various embodiments, hybrid in-band on-channel ((H)IBOC) signals are processed. In some implementations, the (H)IBOC signals have a desired signal in a central frequency range, an upper interference signal occupying a frequency range including and extending beyond an upper portion of the central frequency range, and a lower interference signal occupying a frequency range including and extending below a lower portion of the central frequency range. The lower and upper interference signals are nulled by generating surrogate signals from the desired signal, from the upper interference signal and from the lower interference signal. The antennas are electronically directed based on the surrogate signals and the interference signals, which can be used to null the interference signals.

In another implementation involving (H)IBOC signals, a central digitally modulated portion of the received radio signals having a bandwidth of roughly 600 kHz is captured, using approximately 100 kHz of lower and upper sidebands adjacent the central portion to electronically direct the receive antennas and null interference characteristics of the lower and upper sidebands. In another implementation, (H)IBOC signals having plurality of channels are processed, and co-channel interference of the (H)IBOC signals is cancelled by removing 1st adjacent FM-distortions from adjacent channels of the (H)IBOC signals. In yet another implementation with (H)IBOC signals that include a plurality of channels, co-channel interference is cancelled by removing 1st adjacent FM-distortions in a first mode, and a radiation pattern of the receive antennas is modified in the second mode based on at least one of the estimated phase-shifts and the estimated amplitude.

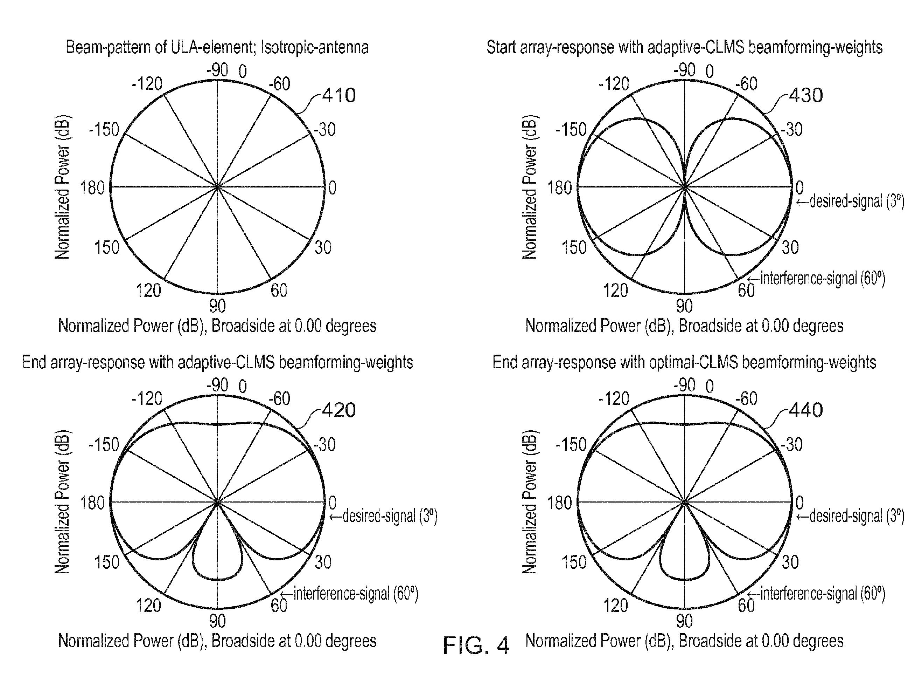

In some embodiments, an analog central portion of received signals is used to perform low latency phase-diversity and beamforming of the received radio signals, based on a host FM-signal. Main-lobe steering and null-steering of the antennas is carried out in this regard, based on the phase and amplitude-estimations. Such approaches may, for example, be implemented in a manner commensurate with that shown in Figure 4.

In a particular embodiment the captured signals have a desired signal in a central frequency range, and both upper and lower interference signals. The upper interference signal occupies a frequency range including and extending beyond an upper portion of the central frequency range. The lower interference signal occupies a frequency range including and extending below a lower portion of the central frequency range. The lower and upper interference are nulled as follows. Surrogate signals are filtered from the desired signal, from the upper interference signal and from the lower interference signal. Each surrogate signal occupies a frequency range that is centered on and smaller than the signals from which the surrogate signal is filtered. The antennas are electronically directed in at least one of the first and second modes as discussed above, based on the surrogate signals and the interference signals. The upper and lower interference signals are nulled via null-steering to the respective upper and lower interference signals, based upon the surrogate signals for the upper and lower interference signals. Using this approach, reception of the desired signal is facilitated.

Another embodiment is directed to an apparatus including a signal source that transmits in-band on-channel (H)IBOC signals, two or more antennas that receive the (H)IBOC signals, a steering circuit and a combining circuit. The steering circuit electronically directs the antennas in a first (analog-type) mode toward the signal source using an analog portion of the received (H)IBOC signals to modify a radiation pattern of the receive antennas, based on at least one of estimated phase-shifts and estimated amplitude of the received (H)IBOC signals. In a second (digital-type) mode, a digitally-modulated portion of the received (H)IBOC signals is used to electronically direct the receive antennas at the signal source by modifying the radiation pattern of the receive antennas based on at least one of estimated phase-shifts or estimated amplitude of the received signals. The signals via the electronically-directed antenna are combined and provided to a radio receiver. In some implementations, four or more such antennas may be implemented and steered accordingly. Steering may involve, for example, performing low latency phase-diversity and beamforming based on a host FM-signal, and thereby applying main-lobe steering and null-steering based on the phase shift and amplitude-estimations. Further, null-steering may be implemented as discussed above, with the use of surrogates and interference signals for nulling the interference (*e.g*., removing 1^{st} adjacent interference FM-signals).

Turning now to the figures, FIG. 1 shows a beamforming apparatus 100 in accordance with another example embodiment. The apparatus includes four receive-antennas 110, 112, 114 and 116 and a null-steering module 120 that electronically steers the antennas. To control both the phase and amplitude, side-lobes of the radiation patterns of the antenna can be steered via control of the respective patterns at circuits 130, 132, 134 and 136 via the null-steering module 120. Such an approach may be implemented as discussed above, for example, to null interference bands. Steering the nulls of the radiation-pattern in this regard provides the possibility to suppress unwanted signals that could interfere with the desired signal (*e.g.,* the 1^{st} adjacent FM-distortions for (H)IBOC-signals), and the steering can be adaptive.

The output of the respective antenna circuits 130, 132, 134 and 136 is provided to a summation network 140, which combines the signals from the respective antennas 110, 112, 114 and 116 to provide a combined (added) signal having a power greater than that of the individual antennas. The combined signal is provided as an output to radio receiver 150.

The various embodiments described herein may be combined in certain embodiments, and various aspects of individual embodiments may be implemented as separate embodiments. For instance, aspects of FIG. 1 directed to null-steering may be implemented with various approaches shown in the other figures. Further, approaches as otherwise described herein may be implemented in connection with the apparatus shown in FIG. 1.

Using such an approach, the suppression or removal of interference such as the 1st adjacent FM-distortions of a signal, as well as improvement of received signal-power of a desired signal that is transmitted in the hybrid-mode as well as in an all-digital mode, can be achieved. Phase-diversity and beamforming can be used to electronically steer a radiation pattern of multiple receive-antennas for transmitted (H)IBOC signals' patterns. In some implementations, electronically steering of a radiation-pattern is specifically based on an analog central-part of IBOC-signals transmitted in the hybrid-mode and, in an all-digital mode, is based on a digitally-modulated central-part of the IBOC-signals. The analog central-part of an (H)IBOC-signal can be used to perform straightforward and low latency phase-diversity and beamforming based on a (host) FM-signal. Thereby, the phase and amplitude-estimations can be also used to apply main-lobe steering (phase-diversity) and null-steering (beamforming) for improved reception of the digitally-modulated (OFDM-signals) sidebands without actually demodulating the OFDM-signals. In the all-digital mode, null-steering can be used to suppress 1st adjacent FM-distortions.

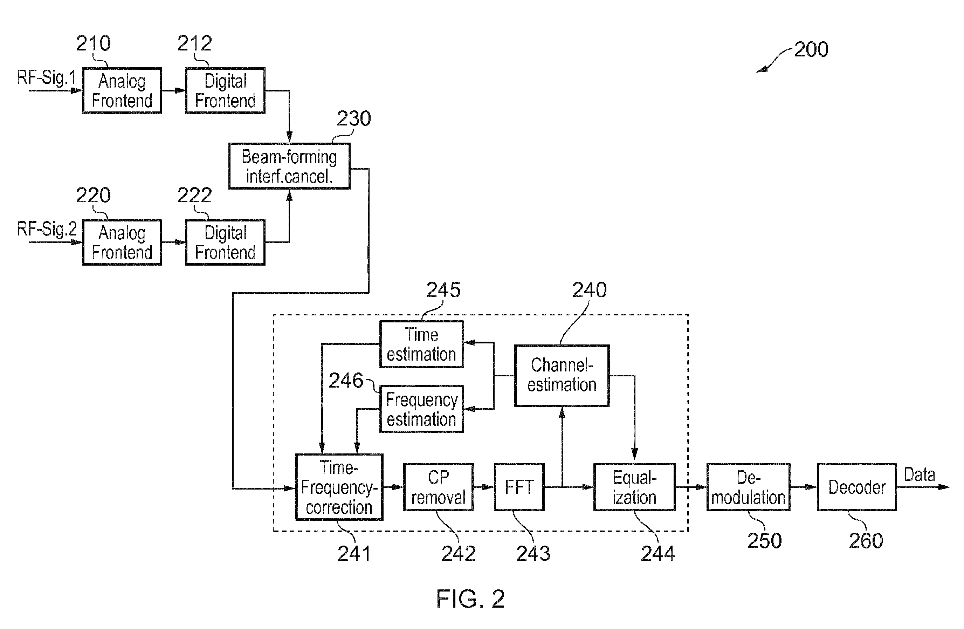

FIG. 2 shows an apparatus 200 for beamforming with null steering, in accordance with another example embodiment. The apparatus 200 is shown with two antenna inputs having analog frontends 210/220, digital frontends 212/222, and connected to a beam forming/interference-cancelling module 230. A channel-estimation module 240 feeds time-estimation module 245 and frequency-estimation module 246, which feed a time/frequency-correction module 241 that receives an output of beamforming/interference-cancelling module 230. Cyclic prefix (CP)-removal module 242 receives the output of module 241 and passes its output to FFT (fast Fourier Transform) module 243 and from the FFT module to both channel estimation module 245 and equalization module 244. The output of the equalization module is provided to a demodulation module 250 and decoder module 260 to provide a data output from the received antenna signal. The beamforming/interference-cancelling module 230 operates to steer the antennas electronically as may be incorporated with one or more embodiments as described herein.

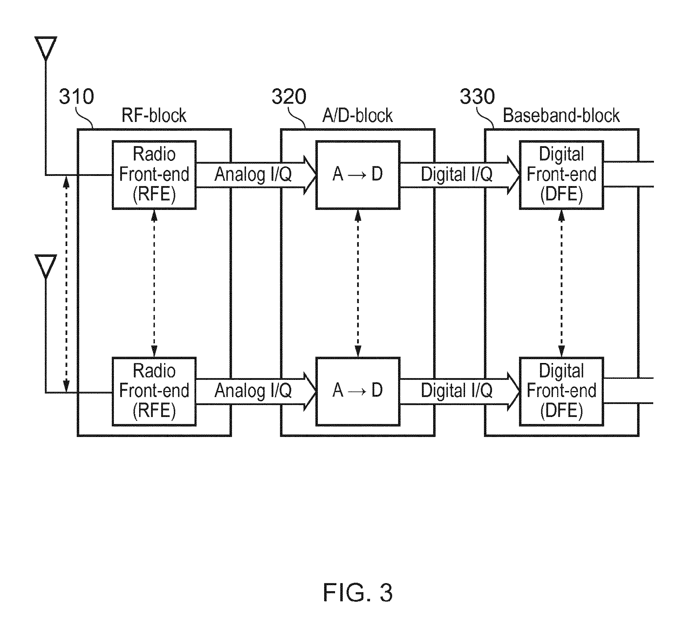

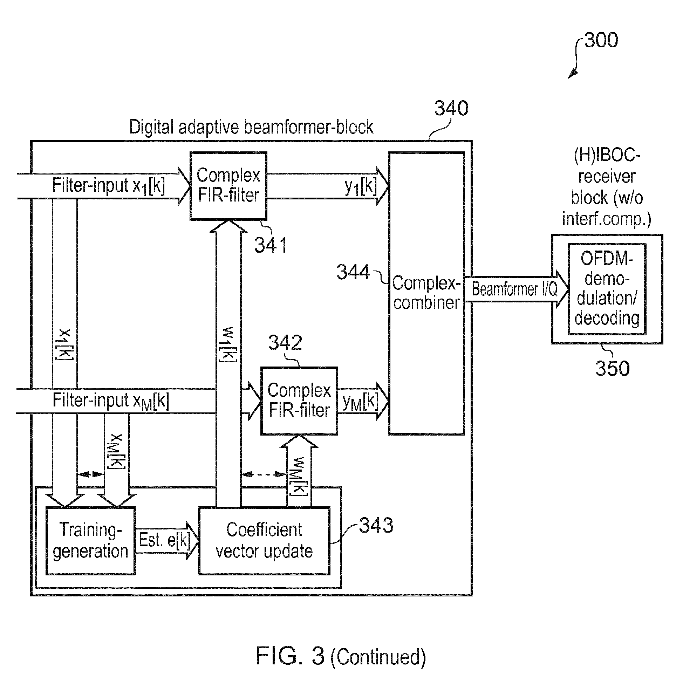

FIG. 3 shows a digital baseband beamformer apparatus 300 with null steering, in accordance with another example embodiment. The apparatus 300 includes a radio frequency (RF)-block 310, an analog-to-digital (A/D) block 320, a baseband-block 330, a digital adaptive beamformer-block 340 and OFDM-demodulating/decoding block 350. The RF- block 310 is coupled to respective antennas and receives RF signals that are digitized at A/D block 320, and passed through a digital front-end at block 330 to beamformer-block 340. Complex FIR-Filters 341 and 342 respectively filter signals from the digital front-ends, based upon training and coefficient vectors developed at a null-steering block 343. A Complex-combiner 344 then combines an output of the filters to provide a desired signal for demodulation and decoding at OFDM-demodulating/decoding block 350.

FIG. 4 shows respective antenna patterns with electronic steering as may be used for cancelling interference via null steering, in accordance with another example embodiment (or various embodiments herein). Pattern 410 shows an isotropic antenna pattern with a generally circular shape. Pattern 420 shows an end-array of two antennas with adaptive beamforming for a desired signal at 3 degrees and interference signal at 60 degrees. Pattern 430 shows an array of two antennas with adaptive beamforming lobes as shown, with a desired signal again at 3 degrees and interference at 60 degrees. Pattern 440 shows an array of two antennas with beamforming for a desired signal that is also at 3 degrees and interference at 60 degrees. These various patterns may be used in connection with beamforming and apparatuses as discussed herein.

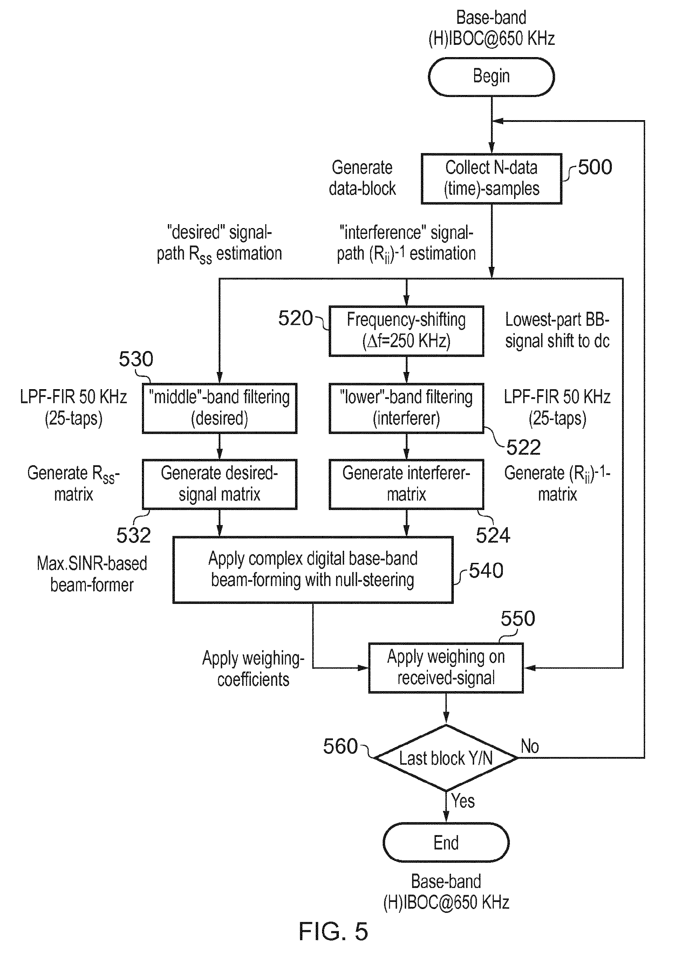

FIG. 5 shows flow diagram for beamforming, in accordance with another example embodiment. At block 500 data samples are collected from a base-band (H)IBOC signal at 650kHz, for generating a data block. At block 520, frequency shifting is carried out with a change in frequency of 250 kHz. Lower-band filtering (for interference) is carried out at block 522 and a corresponding interferer-matrix is generated at block 524. Middle-band filtering (for a desired signal) is carried out at block 530, and a corresponding desired-signal matrix is generated at block 532. Complex digital base-band beamforming is carried out at block 540, as may be implemented in accordance with one or more embodiments described herein. Weighing is applied on the signal at block 550, based on weighing coefficients provided in accordance with the beamforming to provide a desired signal. If the data being processed is a last block of the data at block 560, the process ends, or otherwise continues again at block 500 with a next block of data.

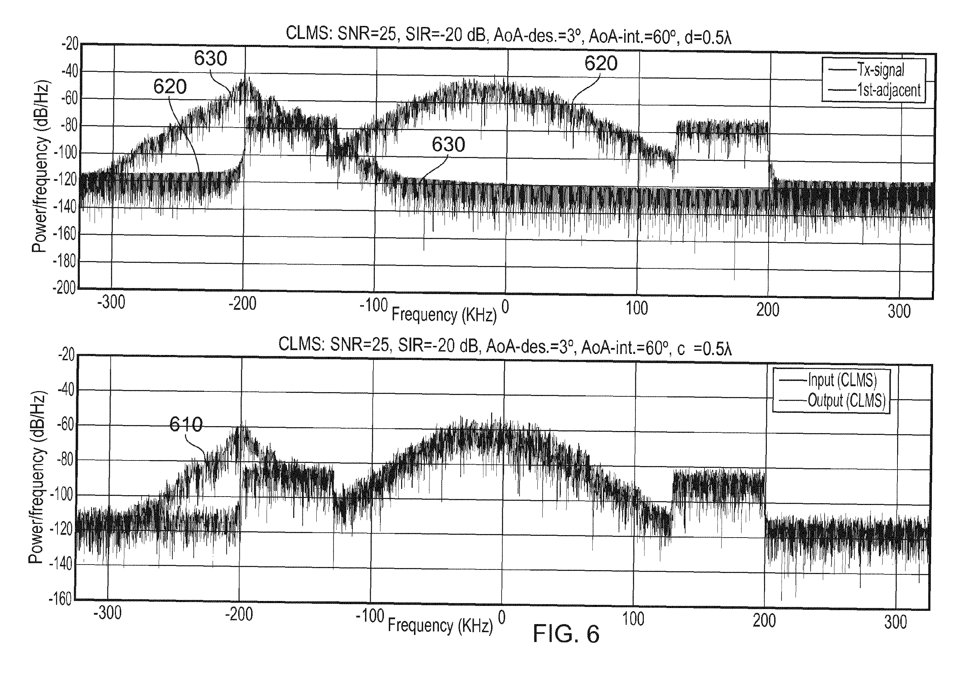

FIG. 6 shows plots of signals processed in accordance with one or more embodiments. Curve 610 in the lower plot shows a base-band of a received radio signal that occupies a bandwidth of roughly 600 kHz (*i.e.,* between -300 kHz and +300 kHz). This received signal includes a desired (H)IBOC-signal, which occupies roughly 400 kHz between -200 kHz and +200 kHz (shown by curve 620 in the upper plot). The received-signal can include zero, one or two 1^{st} adjacent (FM)-interference signals. The interference FM-signals occupy roughly 200 kHz, where the lower 1^{st} adjacent interference-signal is between -300 kHz and -100 kHz, shown by curve 630, and an upper 1^{st} adjacent interference-signal is between +100 kHz and +300 kHz. A 1^{st} adjacent interference signal for the digitally-modulated lower-and upper-sidebands of the (H)IBOC-signal is a co-channel interference-signal that occupies the same frequencies as the lower- and upper-sidebands.

For beamforming with null-steering, a portion of a roughly 100 kHz wide (frequency-bin of 100 kHz) is used to obtain surrogates (representatives) for the desired-((H)IBOC)-signal, the lower 1^{st} adjacent interference-signal, and the upper 1^{st} adjacent interference-signal. The surrogate of the desired-signal is obtained in the frequency-bin around zero Hertz (0 kHz) between -50 kHz and +50 kHz. The surrogate of the lower 1^{st} adjacent interference-signal is obtained in the frequency-bin around -250 kHz between -200 kHz and -300 kHz. The surrogate of the upper 1^{st} adjacent is obtained in the frequency-bin around +250 kHz between +200 kHz and +300 kHz.

The surrogates of the desired signal and the interference signals are used in a beamforming algorithm, which calculates/estimates the weights that maximize the signal to interference-plus-noise ratio (SINR), such as may be implemented with FIG. 1. The weights are, for example, with one 1^{st} adjacent interference signal and a two antenna beam-former, and two estimated complex-numbers (representing amplitude and phase estimates) to adjust the beam-pattern. The beam-former uses the surrogate information of the desired signal to prevent null-steering to the desired signal. In addition, the beam-former uses information of the 1^{st} adjacent interference signal (*i.e.,* lower or upper surrogates), to steer a null to the lower, respectively, upper interference-signal. The estimation-criterion is the maximization of the SINR. This surrogate-information may, for example, be obtained by filtering the received baseband (H)IBOC-signal including the 1^{st} adjacent signals (*e.g.,* a baseband signal with a bandwidth of roughly 600 kHz between -300 kHz and +300 kHz as shown by curve 610). Fast, low-complexity and accurate beamforming can be carried out with null-steering in this regard, to remove the 1^{st} adjacent interference (FM-) signal on (H)IBOC signals.

Various blocks, modules or other circuits may be implemented to carry out one or more of the operations and activities described herein and/or shown in the figures. In these contexts, a "block" (also sometimes "logic circuitry" or "module") is a circuit that carries out one or more of these or related operations/activities (*e.g*., beamformer, surrogate-generating or null-steering modules). For example, in certain of the above-discussed embodiments, one or more modules are discrete logic circuits or programmable logic circuits configured and arranged for implementing these operations/activities, as in the circuit modules shown in FIG. 1. In certain embodiments, such a programmable circuit is one or more computer circuits programmed to execute a set (or sets) of instructions (and/or configuration data). The instructions (and/or configuration data) can be in the form of firmware or software stored in and accessible from a memory (circuit). As an example, first and second modules include a combination of a CPU hardware-based circuit and a set of instructions in the form of firmware, where the first module includes a first CPU hardware circuit with one set of instructions and the second module includes a second CPU hardware circuit with another set of instructions.

Certain embodiments are directed to a computer program product (e.g., nonvolatile memory device), which includes a machine or computer-readable medium having stored thereon instructions which may be executed by a computer (or other electronic device) to perform these operations/activities.

Based upon the above discussion and illustrations, those skilled in the art will readily recognize that various modifications and changes may be made to the various embodiments without strictly following the exemplary embodiments and applications illustrated and described herein. For example, various aspects may be directed to using an analog-based mode without a digital mode, or using a digital mode without an analog mode. Certain embodiments described involving a particular type of signal maybe implemented with other types of signals. Further, additional antennas may be used to suit various applications. Such modifications do not depart from the true spirit and scope of various aspects of the invention, including aspects set forth in the claims.

## Claims

1. An apparatus comprising:
at least two receive antennas configured and arranged to receive radio signals from a signal source;
a first circuit configured and arranged to
in a first mode, electronically direct the receive antennas toward the signal source by using an analog portion of the received radio signals to modify a radiation pattern of the receive antennas, based on at least one of estimated phase-shifts and estimated amplitude of the received radio signals, and
in a second mode, use a digitally-modulated portion of the received radio signals to electronically direct the receive antennas at the signal source by modifying the radiation pattern of the receive antennas based on at least one of estimated phase-shifts and estimated amplitude of the received signals; and
a second circuit configured and arranged to combine the radio signals as electronically-directed by the first circuit, and provide the combined radio signals to a radio receiver.

2. The apparatus of claim 1, wherein the first circuit is configured and arranged to cancel at least a portion of interference by electronically directing the receive antennas in at least one of the first and second modes.

3. The apparatus of claim 1, wherein
the radio signals are hybrid in-band on-channel ((H)IBOC) signals having a desired signal in a central frequency range, having an upper interference signal occupying a frequency range including and extending beyond an upper portion of the central frequency range, and having a lower interference signal occupying a frequency range including and extending below a lower portion of the central frequency range, and
the first circuit is configured and arranged to null the lower and upper interference signals by generating surrogate signals from the desired signal, the upper interference signal and the lower interference signal, and electronically direct the receive antennas in at least one of the first and second modes based on the surrogate signals and the interference signals.

4. The apparatus of claim 1, wherein the first circuit is configured and arranged to, in the first mode, use a central portion of the received radio signals to electronically direct the receive antennas at the signal source based on estimated phase-shifts or estimated amplitude of the received signals, and to suppress FM-distortions by nulling interference in the radio signals based on lower and upper interference sidebands of the radio signals that are adjacent the central portion of the radio signals.

5. The apparatus of claim 1, wherein the radio signals are (H)IBOC signals, and the first circuit is configured and arranged to, in the second mode, capture a central digitally modulated portion of the received radio signals having a bandwidth of roughly 600 kHz, by using approximately 100 kHz of lower and upper sidebands adjacent the central portion to electronically direct the receive antennas and null interference characteristics of the lower and upper sidebands.

6. The apparatus of claim 1, wherein the received radio signals are (H)IBOC signals that include a plurality of channels, and the first circuit is configured and arranged to cancel co-channel interference of the (H)IBOC signals by removing 1st adjacent FM-distortions from adjacent channels of the (H)IBOC signals in the first mode and in the second mode.

7. The apparatus of claim 1, wherein the received radio signals are (H)IBOC signals that include a plurality of channels, and the first circuit is configured and arranged to
in the first mode, cancel co-channel interference of the (H)IBOC signals by removing 1st adjacent FM-distortions, and
in the second mode, modify the radiation pattern of the receive antennas based on at least one of the estimated phase-shifts and the estimated amplitude.

8. The apparatus of claim 1, wherein the electronic steering is based on the estimated phase-shifts and the estimated amplitudes of multiple ones of the received signals.

9. The apparatus of claim 1, wherein, in the first mode, the first circuit is configured and arranged to use an analog central portion of the received signals to perform low latency phase-diversity and beamforming of the received radio signals in response to a host FM-signal and thereby apply main-lobe steering and null-steering of the receive antennas based on the phase and amplitude-estimations.

10. The apparatus of claim 1, wherein the first circuit is configured and arranged to null unwanted radiation-patterns of the receive antennas by electronically directing the receive antennas toward the signal source in both the first mode and the second mode.

11. The apparatus of claim 1, wherein
the radio signals have a desired signal in a central frequency range, an upper interference signal occupying a frequency range including and extending beyond an upper portion of the central frequency range, and a lower interference signal occupying a frequency range including and extending below a lower portion of the central frequency range, and
the first circuit is configured and arranged to null the lower and upper interference signals by:
filtering surrogate signals from the desired signal, the upper interference signal and the lower interference signal, each surrogate signal occupying a frequency range that is centered on and smaller than the signals from which the surrogate signal is filtered, and
electronically directing the receive antennas in at least one of the first and second modes based on the surrogate signals and the interference signals, and nulling the upper and lower interference signals by null-steering to the respective upper and lower interference signals respectively based upon the surrogate signals for the upper and lower interference signals, thereby providing reception of the desired signal.

12. An apparatus comprising:
a signal source configured and arranged to transmit in-band on-channel (H)IBOC signals;
at least two receive antennas configured and arranged to receive the (H)IBOC signals from the signal source;
a first circuit configured and arranged to
in a first mode, electronically direct the receive antennas toward the signal source by using an analog portion of the received (H)IBOC signals to modify a radiation pattern of the receive antennas, based on at least one of estimated phase-shifts and estimated amplitude of the received (H)IBOC signals, and
in a second mode, use a digitally-modulated portion of the received (H)IBOC signals to electronically direct the receive antennas at the signal source by modifying the radiation pattern of the receive antennas based on at least one of estimated phase-shifts or estimated amplitude of the received signals; and
a second circuit configured and arranged to combine the received signals as electronically-directed by the first circuit, and provide the (H)IBOC signals, received via the electronically-directed receive antennas, to a radio receiver.

13. The apparatus of claim 12, wherein the at least two of the receive antennas includes four receive antennas, and the first circuit is configured and arranged to, in the first mode, use a central portion of the received radio signals to electronically direct the receive antennas at the signal source based on estimated phase-shifts or estimated amplitude of the received signals and to suppress FM-distortions.

14. The apparatus of claim 12, wherein, in at least one of the first and second modes, the first circuit is configured and arranged to use an analog central portion of the received signals to perform low latency phase-diversity and beamforming based on a host FM-signal, and thereby apply main-lobe steering and null-steering based on the phase shift and amplitude-estimations.

15. The apparatus of claim 12, wherein
the (H)IBOC signals have a desired signal in a central frequency range, an upper interference signal occupying a frequency range including and extending beyond an upper portion of the central frequency range, and a lower interference signal occupying a frequency range including and extending below a lower portion of the central frequency range, and
the first circuit is configured and arranged to null the lower and upper interference signals by:
filtering surrogate signals from the desired signal, the upper interference signal and the lower interference signal, each surrogate signal occupying a frequency range that is centered on and smaller than the signals from which the surrogate signal is filtered, and
electronically directing the receive antennas in at least one of the first and second modes based on the surrogate signals and the interference signals, and nulling the upper and lower interference signals by null-steering to the upper and lower interference signals respectively based upon the surrogate signals for the upper and lower interference signals, thereby providing reception of the desired signal.

16. The apparatus of claim 15, wherein nulling the upper and lower interference signals includes removing 1^{st} adjacent interference FM-signals from the (H)IBOC signals.

17. A method comprising:
providing at least two receive antennas configured and arranged to receive radio signals from a signal source;
in a first mode, electronically directing the receive antennas toward the signal source by using an analog portion of the received radio signals to modify a radiation pattern of the receive antennas, based on at least one of estimated phase-shifts and estimated amplitude of the received signals, and
in a second mode, electronically directing the receive antennas at the signal source using a digitally-modulated portion of the received radio signals to modify the radiation pattern of the receive antennas based on at least one of the estimated phase-shifts or estimated amplitudes of the received signals; and
combining the radio signals as received via the electronically-directed antennas, and providing the combined radio signals to a radio receiver.

18. The method of claim 17, wherein the received radio signals are (H)IBOC signals that include a plurality of channels, and further including cancelling co-channel interference of the (H)IBOC signals by removing 1st adjacent FM-distortions from adjacent channels of the (H)IBOC signals in the first mode and in the second mode.

19. The method of claim 17, further including using a central portion of the received radio signals, in the second mode, to electronically direct the receive antennas at the signal source, using estimated phase-shifts or estimated amplitude of the received signals and suppressing FM-distortions in interference bands adjacent the central portion.

20. The method of claim 17, wherein modifying the radiation pattern includes beam steering to lower and upper interference signals respectively having frequency ranges that are lower and higher than a central frequency range, based upon surrogates derived from the respective interference signals and having a frequency range that is smaller than and centered on the frequency range of the interference signals.
